(19) Europäisches Patentamt

European Patent Office

Office européen des brevets

(11) Numéro de publication : **0 202 178**
**B1**

# (12) FASCICULE DE BREVET EUROPÉEN

(45) Date de publication du fascicule du brevet :
**21.12.88**

(21) Numéro de dépôt : **86420115.7**

(22) Date de dépôt : **30.04.86**

(51) Int. Cl.⁴ : **C 09 D   3/82**

(54) Peinture à base de résine méthylphénylsiloxanique contenant de la silice et de la poudre d'aluminium et conduisant à des revêtements ayant une dureté améliorée à chaud.

(30) Priorité : **03.05.85 FR 8506734**

(43) Date de publication de la demande :
**20.11.86 Bulletin 86/47**

(45) Mention de la délivrance du brevet :
**21.12.88 Bulletin 88/51**

(84) Etats contractants désignés :
**AT BE CH DE FR GB IT LI LU NL SE**

(56) Documents cités :
**EP–A– 0 104 665**
**FR–A– 1 387 725**
**FR–A– 1 411 160**
**GB–A–    843 074**
**US–A– 3 801 522**

(73) Titulaire : **RHONE-POULENC CHIMIE**
**25, quai Paul Doumer**
**F-92408 Courbevoie Cedex (FR)**

(72) Inventeur : **Pouchol, Jean-Marie**
**53, rue Villeroy**
**F-69003 Lyon (FR)**
Inventeur : **Gros, Louis**
**Les Eparviers Solaize**
**F-69360 Saint-Symphorien d'Ozon (FR)**

(74) Mandataire : **Seugnet, Jean Louis et al**
**RHONE-POULENC INTERSERVICES Service Brevets**
**Chimie Centre de Recherches de Saint-Fons B.P. 62**
**F-69192 Saint-Fons Cedex (FR)**

## Description

La présente invention a pour objet des peintures mates à base de résines méthylphénylpolysiloxaniques associées à des quantités déterminées de poudres d'aluminium et de silice finement divisées ; elles conduisent à des revêtements ayant une dureté améliorée à chaud.

Des résines organopolysiloxaniques pigmentées avec de la poudre d'aluminium sont connues depuis le début de la chimie des silicones ; elles figurent dans de nombreux documents notamment dans les brevets américains 2.709.558, 2.743.192, 4.289.677, les brevets français 1.213.487, 1.387.725, 1.393.728, les brevets anglais 818.301, 1.179.127, le brevet allemand 2.046.385 et les demandes japonaises 55.068.695, 55.165.963.

Parmi ces documents, il faut plus particulièrement prendre en considération le brevet américain 2.743.192 et la demande japonaise 55.068.695 qui enseignent l'introduction de charges minérales telles que des silices, dans les mélanges formés des résines organopolysiloxaniques et des poudres d'aluminium.

Plus précisément, le brevet américain 2.743.192 a pour objet des compositions de revêtements comprenant 100 parties d'une résine méthylphénylpolysiloxanique soluble dans les solvants organiques, 70 à 125 parties d'un pigment d'aluminium lamellaire, 12 à 20 % par rapport au pigment d'aluminium d'une charge réfractaire choisie principalement parmi l'oxyde de titane, l'alumine, la silice, l'oxyde de zirconium et 60 à 300 parties de solvants organiques. Le pigment d'aluminium et la charge réfractaire sont constitués de particules dont une forte proportion passe à travers les tamis de 325 mailles par pouce. L'exemple 4 illustre l'emploi d'une silice de diamètre particulaire moyen 44 μm, les revêtements issus de ces compositions ont une résistance thermique améliorée.

Quant à la demande japonaise 55.68 695, elle se rapporte également à des revêtements ayant une bonne tenue thermique destinés à protéger des circuits imprimés. Ces revêtements sont préparés à partir de résines silicones associées à des charges finement divisées telles que l'oxyde de titane, l'aluminium, l'argile, la silice, le talc. Les exemples donnent peu d'indications sur la nature des résines silicones employées ainsi que sur leur concentration au sein des formulations commerciales mises en œuvre ; ils donnent cependant des indications plus précises sur les quantités de charges introduites.

Ainsi l'exemple 1 décrit une composition renfermant 3 parties de silice de surface spécifique 200 m²/g, 10 parties d'oxyde de fer et 80 parties d'une résine silicone X 400 et l'exemple 2 une composition renfermant 25 parties d'une pâte d'aluminium et 69,4 parties d'une résine silicone KR 201.

Le brevet américain 2.743.192 et la demande japonaise 55.68 695 enseignent certaines associations de résines silicones avec des charges minérales et/ou de la poudre d'aluminium pour fabriquer des revêtements à bonne résistance thermique ; elles n'enseignent pas les moyens à mettre en jeu pour obtenir des revêtements conservant une bonne dureté à chaud, c'est-à-dire dépourvus de thermoplasticité.

La suppression de la thermoplasticité est fortement recherchée dans le cas de revêtements anti-adhérents, à base de résines silicones, déposés sur des objets qui sont manipulés à chaud tels que des ustensiles de cuisine. Il est bien évident que si les revêtements sont facilement arrachés, ou décollés, ou troués, ils ne pourront plus conférer un caractère anti-adhérent à des objets qui sont constamment en contact avec des produits collants ou incrustants, formés au cours de la cuisson d'aliments. Il existe donc un besoin de revêtements ne se ramollissant pas à chaud, peu coûteux, faciles à appliquer, dans le domaine de l'anti-adhérence alimentaire.

D'une façon inattendue, il a maintenant été trouvé que des mélanges de résines silicones avec des quantités déterminées de poudres d'aluminium et de silices finement divisées, permettent d'obtenir des revêtements mats de résines silicones conservant une bonne dureté à chaud. La présente invention a pour objet des compositions organopolysiloxaniques conduisant à des revêtements ayant cette qualité : ces compositions organopolysiloxaniques sont caractérisées (1) en ce qu'elles comportent :

(A) 100 parties d'une résine méthylphénylpolysiloxanique, en solution dans un solvant organique, constituée de motifs choisis dans le groupe de ceux de formules $CH_3SiO_{1,5}$, $(CH_3)_2SiO$, $(C_6H_5)CH_3SiO$, $C_6H_5SiO_{1,5}$, $(C_6H_5)_2SiO$, répartis selon un rapport $C_6H_5/Si$ de 0,3 à 0,85 et un rapport $(C_6H_5 + CH_3)/Si$ de 1,1 à 1,65, de taux d'hydroxyles liés aux atomes de silicium de 0,5 à 9 %.

(B) 3 à 25 parties de silices finement divisées de surface spécifique BET d'au moins 40 m²/g.

(C) 5 à 45 parties de poudres d'aluminium, et en ce que le rapport pondéral (B) + (C)/A est situé dans la plage 0,15 à 0,50.

La résine méthylphénylpolysiloxanique (A) est constituée, comme indiqué ci-avant, de motifs choisis parmi ceux de formules $CH_3Si_{1,5}$, $(CH_3)_2SiO$, $(CH_3)(C_6H_5)SiO$, $C_6H_5SiO_{1,5}$ et $(C_6H_5)_2SiO$ ; ces motifs ne sont pas associés d'une manière quelconque, en effet ils doivent conduire à un rapport $C_6H_5/Si$ de 0,3 à 0,85, de préférence 0,40 à 0,80 et à rapport $(CH_3 + C_6H_5)/Si$ de 1,1 à 1,65, de préférence 1,20 à 1,60. Elles renferment en outre de 0,5 à 9 %, de préférence 0,6 % à 8,5 % de radicaux hydroxyles liés aux atomes de silicium.

Dans ce qui précède et ce qui suit, sauf mentions contraires les % et teneurs sont en poids.

Les différentes méthodes de fabrications de ces résines sont bien connues ; elles consistent habituellement à cohydrolyser des silanes choisis dans le groupe de ceux de formules $CH_3SiX_3'$

$(CH_3)_2SiX_2$, $CH_3$ $(C_6H_5)$ $SiX_2$, $C_6H_5SiX_3$, $(C_6H_5)_2SiX_2$ dans lesquelles le symbole X représente un atome d'halogène, de préférence un atome de chlore ; quelques radicaux alcoxyles peuvent être liés aux atomes de silicium de ces silanes, au plus 20 % par rapport à l'ensemble des radicaux X ; ils ont de 1 à 4 atomes de carbone et sont choisis parmi les radicaux méthoxyle, éthoxyle, n-propoxyle, isopropoxyle.

Le mélange de silanes à cohydrolyser renferme nécessairement des proportions déterminées et un choix déterminé de ces silanes de telle façon qu'on y retrouve les rapports précédemment définis pour les motifs c'est-à-dire un rapport $C_6H_5$/Si de 0,3 à 0,85 et un rapport $(CH_3 + C_6H_5)$/Si de 1,1 à 1,65.

A titre illustratif peuvent être mentionnés les mélanges :
- $CH_3SiCl_3$ (1 mole) $(CH_3)_2SiCl_2$ (1 mole) et $C_6H_5SiCl_3$ (1,5 mole)
- $CH_3SiCl_3$ (1 mole), $(CH_3)_2SiCl_2$ (1 mole) $(C_6H_5)$ $SiCl_3$ (1 mole) et $(C_6H_5)_2SiCl_2$ (1 mole)
- $CH_3SiCl_3$ (1,5 mole), $(CH_3)_2SiCl_2$ (1 mole) et $(C_6H_5)$ $(CH_3)$ $SiCl_2$ (2 moles)
- $(CH_3)_2SiCl_2$ (2 moles) et $C_6H_5SiCl_3$ (3 moles).

La cohydrolyse est effectuée au sein de solvants dont les plus usuels sont peu miscibles ou non miscibles avec l'eau. De tels solvants comprennent :
- des hydrocarbures aromatiques comme le toluène, le xylène, le cumène, la tétraline, la décaline
- des hydrocarbures aliphatiques et cycloaliphatiques comme l'hexane, l'heptane, l'octane, le dodecane, le cyclohexane, le méthylcyclohexane
- des esters d'acides monocarboxyliques et de monoalcools aliphatiques comme l'acétate de n-butyle, l'acétate d'éthyl-2 hexyle
- des éthers aliphatiques comme l'éther isopropylique, l'éther n-butylique
- des cétones aliphatiques et cycloaliphatiques comme l'acétone, la méthyléthylcétone, la cyclohexanone, la méthylcyclohexanone.

Les cétones ne sont pas utilisées seules mais en association avec les autres solvants non cétoniques dans une proportion ne dépassant pas 50 parties pour 100 parties des solvants non cétoniques.

On peut utiliser de 50 à 500 parties de solvants pour 100 parties de silanes à cohydrolyser.

L'opération de cohydrolyse peut être effectuée par addition des halogénosilanes en solution dans les solvants à l'eau d'hydrolyse ; il est possible de faire une dispersion préalable d'une partie ou de la totalité des solvants dans l'eau d'hydrolyse avant d'y ajouter les halogénosilanes. Pendant cette opération, il est recommandé de ne pas dépasser une température de 90 °C dans le milieu réactionnel.

Lorsque la cohydrolyse est terminée, la phase aqueuse est éliminée et la phase organique est lavée avec l'eau jusqu'à neutralité. La phase organique renferme les résines méthylphénylpolysiloxaniques ; celles-ci, encore peu condensées, se présentent évidemment sous la forme de solutions dans les solvants organiques de cohydrolyse ; cependant d'autres solvants organiques peu ou non miscibles avec l'eau peuvent être ajoutés en fin de la cohydrolyse ou au cours des lavages.

Ces résines sont ensuite avancées, c'est-à-dire préréticulées par condensation d'une partie des radicaux SiOH qu'elles renferment. Cet avancement peut être effectué par simple chauffage à température supérieure à 80 °C, l'eau de condensation est alors éliminée au fur et à mesure de sa formation par distillation azéotropique ou par entraînement avec les vapeurs du solvant, celui-ci étant recyclé dans le milieu réactionnel. L'avancement peut être complété, ou même totalement effectué, par chauffage en présence d'un catalyseur de condensation et de réarrangement choisi parmi les sels d'acides carboxyliques de plomb, de zinc, de fer, de cobalt et les chlorures de fer (ferrique), de zinc.

De préférence, on utilise les sels d'acides monocarboxyliques ayant de 4 à 12 atomes de carbone tels que l'hexanoate de zinc, l'éthyl-2 hexanoate de zinc, l'octate de zinc, le dodécanoate de zinc. La quantité utilisée des sels doit être suffisante pour fournir de 50 a 6000 parties de métal pour 1 million de parties des solution de résines. Ces solutions peuvent être réglées a la concentration voulue en résines par élimination ou addition de solvants, cette opération ayant lieu avant l'avancement, au cours de l'avancement ou après l'avancement. Habituellement les solutions obtenues renferment de 30 à 85 % de résines, de préférence 35 à 80 % et leur viscosité est de l'ordre de 20 à 3500 mPa. S à 25 °C.

Les silices finement divisées (B) sont utilisées à raison de 3 à 25 parties, de préférence 4 à 20 parties pour 100 parties des résines méthylphénylpolysiloxaniques (A). Elles sont choisies parmi les silices de combustion, les silices de précipitation, les aérogels de silice : elles possèdent un diamètre particulaire moyen inférieur à 0,1 $\mu$m et leur surface spécifique BET est supérieure à 40 m$^2$/g, se situant le plus souvent dans la plage 100 à 380 m$^2$/g.

Les poudres d'aluminium (C) sont utilisées à raison de 5 à 45 parties, de préférence 10 à 40 parties, pour 100 parties des résines méthylphénylpolysiloxaniques (A). Elles sont constituées de particules lamellaires ayant généralement un diamètre moyen situé dans la plage 1 à 20 $\mu$m. Elles peuvent être utilisées telles qu'elles ; il est recommandé cependant d'employer des empâtages des poudres dans des solvants organiques usuels compatibles avec les silicones tels que les coupes pétrolières d'hydrocarbures aliphatiques et/ou aromatiques distillant par exemple à l'intérieur de l'intervalle 120 °C-300 °C, ou le toluène, le xylène, la tétraline, la décaline l'acétate de butyle, le cyclohexane, le méthylcyclohexane.

La concentration des poudres d'aluminium dans ces empâtages est de l'ordre de 40 à 80 % en poids. De préférence, on utilise les poudres d'aluminium ayant des propriétés pelliculaires obtenues par exemple à la suite d'un broyage humide en présence de solvants et d'acide stéarique ; ces propriétés confèrent aux particules la faculté de s'orienter et de flotter d'une manière telle à la surface des revêtements qu'elles donnent à l'oeil l'impression d'une surface métallique continue ; la valeur pelliculante, mesurée selon la norme DIN 55 923 est d'au moins 65 % pour une prise d'essai de 2 à 3 g. Parallèlement les poudres possèdent un pouvoir couvrant sur l'eau, mesuré également selon la norme DIN 55 923, de l'ordre de 12 000 à 65 000 cm²/g.

En dehors des constituants (A), (B), (C) peuvent être utilisées des huiles diméthylpolysiloxaniques (D) bloquées à chaque extrémité de leur chaîne par un radical triméthylsiloxy, de viscosité 100 à 3 000 mPa·s à 25 °C ; elles sont introduites à raison de 0,1 a 5 parties, de préférence 0,15 à 4,7 parties, pour 100 parties des résines méthylphénylpolysiloxaniques (A). Elles servent principalement à augmenter les propriétés antiadhérentes des revêtements issus du durcissement des compositions de l'invention.

La préparation des compositions conformes à l'invention a lieu par simple mélange des constituants (A), (B), (C) et éventuellement (D), à l'aide des appareillages usuels.

L'ordre d'introduction des divers constituants peut être quelconque ; il est recommandé cependant de bien disperser tout d'abord la silice (B) dans les solutions de résines (A) et d'ajouter ensuite les poudres d'aluminium (C) et éventuellement les huiles (D).

Il est nécessaire pour obtenir une bonne dureté à chaud d'introduire les silices (B) selon les quantités précitées de 3 à 25 parties et les poudres d'aluminium (C) selon les quantités précitées de 5 à 45 parties pour 100 parties des résines (A) ; c'est une première exigence ; la deuxième exigence est que ces quantités conduisent à un rapport pondéral (B) + (C) / (A) situé dans la plage 0,15 à 0,50, de préférence 0,20 à 0,45.

Il est recommandé enfin que les compositions obtenues renferment de 15 à 60 % d'extraits secs, de préférence 20 à 55 % ; elles sont ainsi facilement diluables et homogénéisables. Pour arriver à ces valeurs, on ajoute, si besoin est, des diluants au cours du mélange des constituants (A), (B), (C) et éventuellement (D), ou après leur mélange.

Les compositions ainsi définies sont stables au stockage en récipients fermés, en particulier elles ne gélifient pas. Telles quelles ou bien diluées par exemple jusqu'à 10 fois, elles sont appliquées sur des substrats quelconques, stables à la chaleur, tels que les métaux, le verre, le ciment, la brique. Les moyens habituels d'application sont mis en œuvre comme le trempé, la brosse, le rouleau, le pistolet, la projection électrostatique, l'impression. Les couches déposées sont chauffées à une température de l'ordre de 100 à 350 °C pendant 1 à 5 heures.

Les revêtements obtenus ont une épaisseur se situant dans la plage 45 à 50 μm. Ils présentent une dureté élevée à chaud, ainsi à 200 °C leur dureté crayon est supérieure à F (méthode d'essai ECCA-TA-1977) et leur dureté au pendule PERSOZ est supérieure à 150 secondes (norme ISO 1522).

Les revêtements résistent remarquablement à la chaleur, en particulier, ils conservent leurs caractéristiques physiques à des températures supérieures à 250 °C ; en outre ils sont nettement anti-adhérents vis-à-vis de substances collantes ou incrustantes. Cette propriété d'anti-adhérence se maintient aussi bien à chaud qu'à froid. Il en résulte que ces revêtements conviennent parfaitement comme enduits anti-adhérents sur les ustensiles de cuisine tels que plats en verre, en émail, en métal, poêles, casseroles, marmites... Ils garantissent un nettoyage aisé de ces ustensiles et cela pendant une longue période d'utilisation étant donné leur bonne dureté à chaud qui empêche leur détérioration dans le temps, en particulier, par contact avec des objets métalliques tels que fourchettes, couteaux...

L'exemple suivant illustre l'invention :
Exemples :

On introduit dans un ballon en verre équipé d'une agitation et d'une gaine thermométrique, 1500 cm³ d'eau. On met l'agitation en marche et ajoute dans le ballon, à l'aide d'une ampoule de coulée, une solution toluénique de chlorosilanes constituée de 194 g de $(CH_3)_2SiCl_2$, 521 g de $C_6H_5SiCl_3$ et 1100 cm³ de toluène. L'addition dure environ 2 heures, pendant lesquelles on maintient la température au-dessous de 80 °C. On sépare les eaux acides et lave la couche toluénique avec de l'eau jusqu'à neutralité. Cette couche est chauffée au reflux et de l'eau de condensation est éliminée par entraînement avec le toluène au fur et à mesure de sa formation. Lorsque la formation d'eau a cessé, on concentre la couche toluénique par distillation d'une partie du toluène sous une pression réduite de 600 à 650 millibars de manière à obtenir une solution renfermant 70 % d'extrait sec.

On ajoute à 121,5 g de la solution précédente à 70 % d'extraits secs, 65 g de toluène et 0,32 g d'une solution xylènique à 8 % d'éthyl-2 hexanoate de zinc.

Le mélange est concentré par distillation d'une partie du toluène jusqu'à obtention d'une solution à 87 % d'extrait sec, puis il est chauffé au reflux. Pendant ce chauffage, de l'eau est éliminée au fur et à mesure de sa formation et la viscosité de la solution augmente. Lorsque cette viscosité atteint 450 mPa·s à 25 °C, l'opération de condensation est arrêtée. On ajoute alors suffisamment du toluène pour avoir une solution à 50 % d'extrait sec, c'est-à-dire à 50 % d'une résine méthylphénylpolysiloxanique.

La viscosité de la solution est environ 45 mPa·s à 25 °C, le taux de radicaux hydroxyles liés aux atomes de silicium est de 3 % par rapport à la résine et le taux de zinc est de 0,03 % également par rapport à la résine.

La résine méthylphénylpolysiloxanique présente un rapport $(CH_3 + C_6H_5)/Si$ de l'ordre de 1,4 et un rapport $C_6H_5/Si$ de l'ordre de 0,60.

On broie à l'aide d'un broyeur planétaire 100 parties de la solution de résine méthylphénylpolysiloxanique à 50 % d'extrait sec avec 5 parties d'une silice de combustion de surface spécifique BET 300 m²/g pendant 3 heures à la température ambiante.

La dispersion obtenue est placée dans un patouillet équipé d'un agitateur à turbine ; l'agitateur est mis en marche et on introduit successivement dans le patouillet, sur une période de 20 minutes :

- 20 parties d'une empâtage renfermant 65 % en poids d'une poudre d'aluminium lamellaire et 35 % de White-Spirit 140/195.

- 0,5 partie d'une huile diméthylpolysiloxanique bloquée à chaque extrémité de sa chaîne par un radical triméthylsiloxy, de viscosité 300 mPa . s à 25 °C.

On ajoute ensuite 45,5 parties de xylène ; il en résulte la formation d'une peinture homogène pigmentée en gris ayant un rapport pigment/liant de 0,36 et un extrait sec d'environ 40 %.

Les caractéristiques du pigment d'aluminium mis en œuvre dans l'empâtage sont les suivantes :

- la taille moyenne des particules d'aluminium est de 5 μm.

- 99,9 % des particules ont une taille inférieure à 45 μm (selon la norme DIN 53 196 appliquée au tamisage)

- le pouvoir couvrant sur l'eau est de 30 000 à 33 000 cm²/g (selon la norme DIN 55 923)

- la valeur pelliculante est d'au moins 65 % pour une prise d'essai de 2 g (également selon la norme DIN 55 923).

La peinture homogène pigmentée en gris est déposée par pulvérisation sur une plaque d'acier dégraissée ; la couche uniforme déposée est alors chauffée progressivement jusqu'à 300 °C et elle est laissée à cette température pendant 2 heures. Le revêtement obtenu, de couleur gris mat a une épaisseur de l'ordre de 20 μm.

La plaque est disposée sur une plaque chauffante portée à 200 °C ; on mesure à cette température de 200 °C, la dureté crayon et la dureté au pendule Persoz du revêtement de la plaque, on trouve : dureté crayon : H dureté au pendule Persoz : 160-180 secondes.

On détermine d'autre part le caractère antiadhérent du revêtement en opérant selon le Processus ci-après :

on applique sur le revêtement, un ruban adhésif de marque TESA 4330 et soumet le ruban à une pression de 2 kg/cm². L'assemblage composite plaque d'acier-revêtement-ruban adhésif est placé pendant 20 heures dans une étuve portée à 150 °C. Au bout de cette période, on décolle le ruban par pelage à l'aide d'un dynamomètre et trouve une force de décollement de 200 g/cm.

On fabrique une peinture pigmentée en gris avec les mêmes constituants que ceux énumérés précédemment, excepté qu'on utilise 180 parties de la solution de résine méthylphénylpolysiloxanique présentant un rapport pigment/liant de 0,20 et un extrait sec d'environ 43 %.

On opère comme indiqué ci-avant pour mesurer la dureté du revêtement issu de cette peinture, ainsi que son pouvoir anti-adhérent, on trouve :

dureté crayon : H dureté au pendule Persoz : 170 secondes force de décollement : 240 g/cm.

## Revendications

1. Compositions organopolysiloxaniques caractérisées en ce qu'elles comportent :

(A) 100 parties d'une résine méthylphénylpolysiloxanique, en solution dans un solvant organique, constituée de motifs choisis dans le groupe de ceux de formules $CH_3SiO_{1,5}$, $(CH_3)_2SiO$, $(C_6H_5)CH_3SiO$, $C_6H_5SiO_{1,5}$, $(C_6H_5)_2SiO$, répartis selon un rapport $C_6H_5/Si$ de 0,3 à 0,85 et un rapport $(C_6H_5 + CH_3)/Si$ de 1,1 à 1,65, de taux d'hydroxyles liés aux atomes de silicium de 0,5 à 9 %.

(B) 3 à 25 parties de silices finement divisées de surface spécifique BET d'au moins 40 m²/g

(C) 5 à 45 parties de poudres d'aluminium, et en ce que le rapport pondéral (B) + (C)/A est situé dans la plage 0,15 à 0,50.

2. Compositions selon la revendication 1, caractérisées en ce que les silices sont choisies parmi les silices de combustion, les silices de précipitation et les aérogels de silice.

3. Compositions selon les revendications 1 ou 2, caractérisées en ce que la poudre d'aluminium se présente sous forme de particules lamellaires ayant un diamètre moyen compris entre 1 et 20 μm.

4. Compositions selon l'une quelconque des revendications précédentes, caractérisées en ce que la poudre d'aluminium se présente sous forme d'un empattage dans un solvant organique compatible avec les silicones.

5. Compositions selon l'une quelconque des revendications précédentes, caractérisées en ce qu'elles comportent en outre de 0,1 à 5 parties, pour 100 parties de la résine A, d'une huile diméthylpolysiloxane (D) bloquée a chaque extrémité de leur chaîne par un radical triméthylsiloxy et présentant une viscosité de 100 à 3000 mPa · s à 25 °C.

6. Revêtements mats à bonne dureté à chaud obtenus par durcissement d'une composition telle que définie à l'une quelconque des revendications 1 à 5.

7. Articles revêtus d'une revêtement tel que défini à la revendication 6.

## Claims

1. Organopolysiloxane compositions, characterized in that they comprise :

(A) 100 parts of a methylphenylpolysiloxane resin, dissolved in an organic solvent, consisting of units chosen from the group of those of formulae $CH_3SiO_{1,5}$, $(CH_3)_2SiO$, $(C_6H_5)CH_3SiO$, $C_6H_5SiO_{1,5}$ and $(C_6H_5)_2SiO$, distributed in accordance with a $C_6H_5/Si$ ratio of 0.3 to 0.85 and a $(C_6H_5 + CH_3)/Si$ ratio of 1.1 to 1.65, with a concentration of hydroxyls bonded to the silicon atoms of 0.5 to 9 %,

(B) 3 to 25 parts of finely divided silicas with a BET specific surface of at least 40 m²/g,

(C) 5 to 45 parts of aluminium powders, and in that the weight ratio [(B) + (C)]/A is situated in the range 0.15 to 0.50.

2. Compositions according to Claim 1, characterized in that the silicas are chosen from pyrogenic silicas, precipitated silicas and silica aerogels.

3. Compositions according to Claims 1 or 2, characterized in that the aluminium powder is in the form of flaky particles with a mean diameter of between 1 and 20 μm.

4. Compositions according to any one of the preceding claims, characterized in that the aluminium powder is in the form of a paste in a silicone-compatible organic solvent.

5. Compositions according to any one of the preceding claims, characterized in that they additionally comprise from 0.1 to 5 parts, per 100 parts of resin A, of a dimethylpolysiloxane oil (D) blocked by a trimethylsiloxy radical at each end of their chain and having a viscosity of 100 to 3 000 mPa. s at 25 ºC.

6. Matt coatings with good hardness when heated, obtained by curing a composition such as defined in any one of Claims 1 to 5.

7. Articles coated with a coating such as defined in Claim 6.


**Patentansprüche**

1. Organopolysiloxanzusammensetzungen, dadurch gekennzeichnet, daß sie enthalten. :

(A) 100 Teile eines Methylphenylpolysiloxanharzes in Lösung in einem organischen Lösungsmittel, das aus Gruppierungen besteht, ausgewählt aus der Gruppe der Formeln $CH_3SiO_{1,5}$, $(CH_3)_2SiO$, $(C_6H_5)$ $CH_3SiO$, $C_6H_5SiO_{1,5}$, $(C_6H_5)_2SiO$, die gemäß einem Verhältnis $C_6H_5/Si$ von 0,3 bis 0,85 und einem Verhältnis $(C_6H_5 + CH_3)/Si$ von 1,1 bis 1,65 verteilt sind, mit einem Prozentsatz an Hydroxylen, die an die Siliciumatome gebunden sind, von 0,5 bis 9 %,

(B) 3 bis 25 Teile feinverteilter Siliciumdioxide mit einer spezifiscnen Oberfläche BET von mindestens 40 m²/g,

(C) 5 bis 45 Teile Aluminiumpulver und daß das Gewichtsverhältnis (B) + (C)/A in dem Bereich von 0,15 bis 0,50 liegt.

2. Zusammensetzungen gemäß Anspruch 1, dadurch gekennzeichnet, daß die Siliciumdioxide ausgewählt sind unter den pyrogenen Kieselsäuren, den Fällungskieselsäuren und den Kieselaerogelen.

3. Zusammensetzungen gemäß den Ansprüchen 1 oder 2, dadurch gekennzeichnet, daß das Aluminiumpulver in Form von lamellenförmigen Teilchen mit einem mittleren Durchmesser zwischen 1 und 20 μm vorliegt.

4. Zusammensetzungen gemäß einem der vorhergehenden Ansprüche, dadurch gekennzeichnet, daß das Aluminiumpulver in Form einer Paste in einem organischen, mit den Siliconen verträglichen Lösungsmittel vorliegt.

5. Zusammensetzungen gemäß einem der vorhergehenden Ansprüche, dadurch gekennzeichnet, daß sie darüber hinaus 0,1 bis 5 Teile pro 100 Teile des Harzes A, eines Dimethylpolysiloxanöls (D) enthalten, das an jedem Ende seiner Kette durch einen Trimethylsiloxyrest blockiert ist und eine Viskosität von 100 bis 3 000 mPa · s bei 25 ºC aufweist.

6. Matte Überzüge mit guter Warmhärte, erhalten durch Härtung einer Zusammensetzung, wie sie in einem der Ansprüche 1 bis 5 definiert ist.

7. Erzeugnisse, die mit einem Überzug, wie in Anspruch 6 definiert, überzogen sind.